# EUROPÄISCHE PATENTSCHRIFT

(11) **EP 2 740 972 B1**
(45) Veröffentlichungstag und Bekanntmachung des Hinweises auf die Patenterteilung: **09.11.2016**
(21) Anmeldenummer: 13184518.2
(22) Anmeldetag: 16.09.2013
(51) Int. Cl.: F16H 61/448, F16H 47/02, B60W 30/19, B60W 10/103

(54) **Getriebeaggregat für eine landwirtschaftliche Maschine**
Gear assembly for an agricultural machine
Module de boîte de vitesses pour une machine agricole

(30) Priorität: 10.12.2012 DE 102012024068
(43) Veröffentlichungstag der Anmeldung: 11.06.2014
(73) Patentinhaber: CLAAS Industrietechnik GmbH, 33106 Paderborn (DE)
(72) Erfinder: König, Ralf, 33178 Borchen (DE)
(74) Vertreter: Budach, Steffen

(56) Entgegenhaltungen:
- EP-A2- 1 020 314
- DE-A1- 4 223 846
- US-A- 3 166 952
- US-A- 4 376 371
- US-A1- 2009 124 456

## Beschreibung

Die vorliegende Erfindung betrifft ein Getriebeaggregat mit einem mechanischen Stufengetriebe und einem hydrostatischen Getriebe, insbesondere zur Verwendung im Fahrantrieb einer landwirtschaftlichen Maschine.

Ein Stufengetriebe umfasst im Allgemeinen mehrere Sätze von Zahnrädern, die mit unterschiedlichen Übersetzungsverhältnissen miteinander kämmen und von denen jeweils einer an eine Eingangswelle und eine Ausgangswelle des Stufengetriebes koppelbar ist. Um das Übersetzungsverhältnis eines solchen Stufengetriebes mit Klauenschaltung über Zahnkupplungen umzuschalten, ist es notwendig, das Getriebe zunächst zu entlasten, um den gegenwärtig genutzten Zahnradsatz auskoppeln zu können. Damit anschließend ein anderer Zahnradsatz eingekoppelt werden kann, muss das Drehzahlverhältnis von Eingangs- und Ausgangswelle des Stufengetriebes mit dem Übersetzungsverhältnis dieses Zahnradsatzes in Übereinstimmung gebracht werden. Bei Straßenfahrzeugen mit Verbrennungsmotor und rein mechanischem Antriebsstrang beginnt das Schalten mit dem Gaswegnehmen des Verbrennungsmotors, dann wird durch Auskuppeln der Verbrennungsmotor vom Getriebe getrennt. Durch die Trennung vom Verbrennungsmotor und Stufengetriebe müssen nur relativ kleine Drehmassen auf die Solldrehzahl angeglichen werden. Nachdem der neue Gang geschaltet ist, kann durch Einkuppeln die Verbindung zwischen Verbrennungsmotor und Stufengetriebe wieder hergestellt werden.

Zur Drehzahlangleichung werden Sperrsynchronisiereinrichtungen eingesetzt, die zunächst nur einen Reibkontakt zwischen einem Rad des Radsatzes und einer Welle des Getriebes herstellen und das Zustandekommen einer formschlüssigen Verbindung zwischen Rad und Welle erst freigeben, wenn der Reibkontakt zu einer genauen Angleichung der Drehzahlen von Rad und Welle geführt hat.

Aus EP 1 020 314 A2 ist ein Antriebsstrang für ein Fahrzeug bekannt, bei dem ein Verbrennungsmotor ein Stufengetriebe über ein hydrostatisches Getriebe antreibt. Die erforderliche Drehzahlanpassung beim Schalten des Stufengetriebes soll hier durch eine geeignete Steuerung des Übersetzungsverhältnisses des hydrostatischen Getriebes erreicht werden.

In der Praxis zeigt sich jedoch, dass es sehr schwierig ist, das Übersetzungsverhältnis eines hydrostatischen Getriebes im lastfreien Zustand mit der für ein problemloses Schalten des Stufengetriebes erforderlichen Genauigkeit zu steuern. Fehler bei der Drehzahlanpassung können dazu führen, dass der Schaltvorgang misslingt und das Stufengetriebe in Neutralstellung bleibt, oder dass das Einlegen des Gangs zwar gelingt, dabei aber, da die Geschwindigkeit des hydrostatischen Getriebes und des Verbrennungsmotors ruckartig an die Fahrgeschwindigkeit des Fahrzeugs angepasst werden muss, Belastungsspitzen auftreten, die zu hohem Verschleiß und im Laufe der Zeit zu Getriebeschäden führen.

Es wäre zwar grundsätzlich denkbar, auch in dem Antriebsstrang gemäß EP 1 020 314 A2 das Stufengetriebe mit herkömmlichen Sperrsynchronisiereinrichtungen auszustatten, doch ist deren Reibverschleiß hier ungleich höher als bei einem rein mechanischen Antriebsstrang, da die Sperrsynchronisiereinrichtung über den Reibkontakt nicht nur die Drehzahl der nicht synchron drehenden Getriebeelemente anpassen muss, sondern zusätzlich auch die des hydrostatischen Getriebes.

Aus EP 1 100 691 B1 ist ein hydrostatisches Getriebe mit zwei über eine gemeinsame Eingangswelle antreibbaren Pumpen und zwei Hydromotoren bekannt. Die Pumpen und Hydromotoren sind miteinander über eine gemeinsame Ringleitung in Reihe verbunden, so dass die beiden Hydromotoren gleiche Durchsätze an Hydraulikfluid haben. So kann, wenn die zwei Hydromotoren verschiedene Achsen eines Fahrzeugs antreiben, ein unerwünschter Schlupf zwischen den Achsen bzw. ein Durchdrehen einer Achse vermieden werden.

Aufgabe der Erfindung ist, ein Getriebeaggregat mit einem Stufengetriebe und einem hydrostatischen Getriebe zu schaffen, bei dem das hydrostatische Getriebe eine exakte Synchronisierung bei einem Schalten des Stufengetriebes ermöglicht.

Die Aufgabe wird gelöst, indem bei einem Getriebeaggregat mit einem mechanischen Stufengetriebe und einem an das Stufengetriebe gekoppelten hydrostatischen Getriebe das hydrostatische Getriebe zwei parallel zueinander mit dem Stufengetriebe verbundene hydrostatische Teilgetriebe umfasst und die beiden Teilgetriebe bei einem Schalten des Stufengetriebes gegeneinander verspannt sind. Durch die Verspannung wirkt während des Schaltens eines der Teilgetriebe als Last auf das andere, und die herkömmlicherweise mit dem lastfreien Zustand eines hydrostatischen Getriebes verbundene Variabilität seines Übersetzungsverhältnisses wird vermieden, obwohl das hydrostatische Getriebe als Ganzes keiner äußeren Last ausgesetzt ist.

Die Teilgetriebe sollten jeweils eine Verstellpumpe und einen Verstell- oder Konstant- Motor umfassen.

Um die Verspannung aufbauen und halten zu können, sind vorzugsweise die Pumpen beider Teilgetriebe über eine gemeinsame Eingangswelle oder ein eingangsseitiges Getriebe mit fester Übersetzung und die Hydromotoren beider Teilgetriebe über eine gemeinsame Ausgangswelle oder ein ausgangsseitiges Getriebe mit fester Übersetzung gekoppelt.

Die beiden Teilgetriebe verfügen vorzugsweise jeweils über eine eigene Ringleitung, die Pumpe und Hydromotor des betreffenden Teilgetriebes verbindet und von der Ringleitung des jeweils anderen Teilgetriebes verschieden ist.

Wenn das hydrostatische Getriebe über längere Zeit betrieben wird und dabei z.B. das Übersetzungsverhältnis des ersten Teilgetriebes höher ist als das des zweiten Teilgetriebes, können sich hohe Druckdifferenzen zwischen den zwei Ringleitungen aufbauen, die, wenn keine Möglichkeit zum Druckausgleich besteht, das hydrostatische Getriebe letztlich zum Blockieren bringen würden. Eine solche Ausgleichsmöglichkeit könnte im einfachsten Fall sich aus Lecks der Pumpen bzw. Hydromotoren ergeben, über die jeweils Druckfluid vom Hochdruckabschnitt in den Niederdruckabschnitt derselben Kreisleitung entweichen kann. Eine bessere Alternative ist, eine Ausgleichsleitung vorzusehen, die die erste und zweite Ringleitung verbindet und ein flussbegrenzendes Element enthält.

Die flussbegrenzende Wirkung des Elements ist vorzugsweise steuerbar. Indem insbesondere das Element gesteuert wird, um den Fluss nicht oder möglichst wenig zu begrenzen, wenn das hydrostatische Getriebe eine äußere Last antreibt, können Effizienzverluste aufgrund der unterschiedlichen Übersetzungsverhältnisse der zwei Teilgetriebe vermieden werden, ohne dass dafür die Übersetzungsverhältnisse aneinander angeglichen werden müssen.

Als flussbegrenzendes Element kommt insbesondere ein Druckbegrenzungsventil in Betracht. Ein solches Druckbegrenzungsventil kann steuerbar sein, indem ein Grenzdruck, bei dessen Überschreitung es öffnet, einstellbar ist.

Das Übersetzungsverhältnis sollte an wenigstens einem der Teilgetriebe unabhängig vom anderen Teilgetriebe durch eine Steuereinheit einstellbar sein.

Indem insbesondere das Übersetzungsverhältnis des ersten Teilgetriebes abwechselnd größer und kleiner als das des zweiten Teilgetriebes eingestellt wird, können Unterschiede des hydrostatischen Drucks zwischen den beiden Teilgetrieben in vorgegebenen Grenzen gehalten werden.

Um eine bedarfsgerechte Regelung des Übersetzungsverhältnisses zu ermöglichen, sind vorzugsweise Drucksensoren an den Ringleitungen angeordnet und mit der Steuereinheit verbunden.

Vorzugweise ist eine Steuereinheit eingerichtet, vor einem Schalten des Stufengetriebes den Unterschied zwischen den Übersetzungsverhältnissen des ersten und des zweiten Teilgetriebes zu erhöhen. So kann das Stufengetriebe einerseits vor dem Schalten energieeffizient, vorzugsweise mit im Rahmen der Einstellgenauigkeit gleichen Übersetzungsverhältnissen, betrieben werden, andererseits ist während des Schaltens die für eine genaue Einstellbarkeit des Übersetzungsverhältnisses des hydrostatischen Getriebes erforderliche Verspannung gewährleistet.

Die Erhöhung des Unterschiedes des Übersetzungsverhältnisses sollte nach Abschluss des Schaltens natürlich zweckmäßigerweise wieder zurückgenommen werden.

In analoger Weise kann vorgesehen sein, dass eine Steuereinheit des Getriebeaggregats vor dem Schalten des Schaltgetriebes die flussbegrenzende Wirkung des flussbegrenzenden Elements heraufsetzt.

Auch diese Wirkung sollte zweckmäßigerweise nach dem Schalten wieder herabgesetzt werden.

Vor dem Schalten sollte die Steuereinheit zweckmäßigerweise auch das Schluckvolumen von Hydromotor und Pumpe wenigstens eines der Teilgetriebe reduzieren. Je geringer das Schluckvolumen ist, umso geringer ist ein Druckstoß, der beim Einlegen eines neuen Gangs im Stufengetriebe aus einer nicht perfekten Drehzahlanpassung resultiert. Je geringer der Druckstoß ist, umso geringer ist die Belastung des Getriebeaggregats und umso weniger störend spürbar ist das Einlegen des Gangs für den Fahrer eines Fahrzeugs, in dem das Getriebeaggregat verbaut ist.

Ein weiterer Gegenstand der Erfindung ist eine landwirtschaftliche Arbeitsmaschine mit einem Fahrantrieb, der ein Getriebeaggregat wie oben beschrieben umfasst.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung des Antriebsstrangs einer landwirtschaftlichen Arbeitsmaschine gemäß einer ersten Ausgestaltung der Erfindung;
- Fig. 2: eine schematische Darstellung eines Antriebsstrangs gemäß einer zweiten Ausgestaltung; und
- Fig. 3: eine schematische Darstellung eines Antriebsstrangs gemäß einer dritten Ausgestaltung der Erfindung.

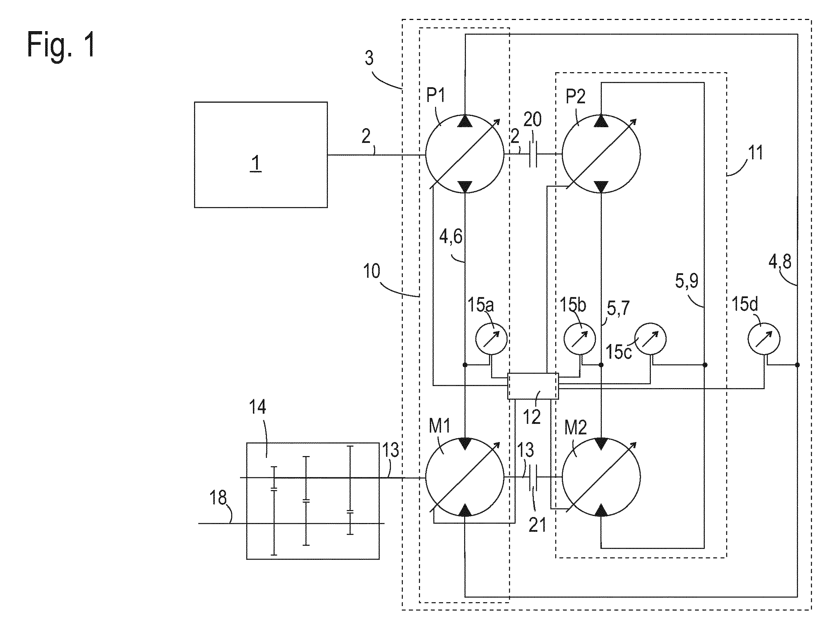

Fig. 1 ist ein Blockdiagramm des Antriebsstrangs einer fahrbaren landwirtschaftlichen Arbeitsmaschine wie etwa eines schweren Mähdreschers. Ein mit 1 bezeichneter Dieselmotor treibt über eine gemeinsame Eingangswelle 2 zwei Pumpen P1, P2 eines hydrostatischen Getriebes 3 mit gleicher Drehzahl an.

Die Pumpe P1 bildet zusammen mit einem Hydromotor M1 und einer Ringleitung 4 ein erstes Teilgetriebe 10 dieses hydrostatischen Getriebes 3. Die Ringleitung 4 hat einen Hochdruckabschnitt 6, der sich von einem Ausgang der Pumpe P1 zu einem Eingang des Hydromotor M1 erstreckt, und einen Niederdruckabschnitt 8, der sich von einem Ausgang des Hydromotors M1 zu einem Eingang der Pumpe P1 erstreckt.

In analoger Weise bilden die Pumpe P2, der Hydromotor M2 und eine Ringleitung 5 mit Hoch- und Niederdruckabschnitten 7, 9 ein zweites Teilgetriebe 11.

Streng genommen ist die Bezeichnung Hochdruckabschnitt für die Leitungsabschnitte 6, 7 bzw. Niederdruckabschnitt für die Leitungsabschnitte 8, 9 nur solange richtig, wie der Motor 1 die Bewegung der Arbeitsmaschine antreibt. Wenn der Motor 1, etwa bei Bergabfahrt, verzögernd wirkt, können auf den Leitungsabschnitten 8, 9 höhere Drücke auftreten als auf den Leitungsabschnitten 6,7.

Die Schluckvolumina der Pumpen P1, P2 und Hydromotoren M1, M2 sind gesteuert durch einen Prozessor 12, der mit je einem Drucksensor 15a, 15b, 15c, 15d an jedem der Leitungsabschnitte 6, 7, 8, 9 verbunden ist. Das Stufengetriebe 14 verfügt zur Erfassung der Fahrtrichtung über einen Drehrichtungssensor 15e.

Die Hydromotoren M1, M2 sind ausgangsseitig gekoppelt, indem sie über eine gemeinsame Ausgangswelle 13 ein Stufengetriebe 14 antreiben. Die Schluckmengen der zwei Pumpen P1, P2 bzw. Motoren M1, M2 sind niemals exakt identisch, so dass, wenn sie mit gleichbleibenden Schluckmengen betrieben werden, die von den Sensoren 15a, 15b erfasste Druckdifferenz zwischen den Leitungsabschnitten 6, 7 (oder auch die von den Sensoren 15c, 15d erfasste Druckdifferenz zwischen den Leitungsabschnitten 8, 9) im Laufe der Zeit anwächst. Eine übermäßige Druckdifferenz ist unerwünscht, da sie die Komponenten des hydrostatischen Getriebes 3 strapaziert und die über das hydrostatische Getriebe 3 übertragbare Leistung einschränkt: nimmt man z.B. an, dass die Schluckmengen der Pumpen und Motoren so eingestellt sind, dass der Druck im Leitungsabschnitt 6 höher wird als in Abschnitt 7, dann ist die vom Teilgetriebe 10 übertragene Leistung größer als die vom Teilgetriebe 11 übertragene, und es können nicht beide Teilgetriebe 10, 11 mit ihrer maximal zulässigen Leistung arbeiten. Bei ausreichend hoher Druckdifferenz kann es sogar zu einer Umkehr der Leistungsflüsse kommen: der Motor M1 treibt nicht nur das Stufengetriebe 14, sondern auch den (dann als Pumpe arbeitenden) Motor M2 an, so dass ein Teil der Leistung zur (dann als Motor arbeitenden) Pumpe P2 zurückfließt und das zweite Teilgetriebe 11 als Last auf das erste Teilgetriebe 10 wirkt: die Teilgetriebe sind gegeneinander verspannt.

Um unter stationären Betriebsbedingungen einen solchen Betriebszustand zu vermeiden, überwacht der Prozessor 12 fortlaufend die von den Sensoren 15a bis 15d erfassten Druckdifferenzen und stellt die Schluckmengen der Pumpen und Motoren bei Bedarf nach, so dass eine zulässige Druckdifferenz zwischen den Leitungsabschnitten 6 und 7 bzw. zwischen den Leitungsabschnitten 8 und 9 nicht überschritten wird. Durch dieses Nachstellen wird das Übersetzungsverhältnis des ersten Teilgetriebes 10 abwechselnd größer und kleiner als das des zweiten Teilgetriebes 11.

Um im Stufengetriebe 14 den Gang zu wechseln, ist es zunächst erforderlich, den aktuellen Gang auszulegen und das Stufengetriebe 14 in eine Neutralstellung zu versetzen, in der die Ausgangswelle 13 und eine vom Stufengetriebe 14 zu einer angetriebenen Achse des Fahrwerks (bei einem Mähdrescher im allgemeinen die Vorderachse) führende Abtriebswelle 18 frei gegeneinander drehbar sind. Das Drehzahlverhältnis dieser beiden Wellen 13, 18 muss anschließend an den neu einzulegenden Gang angepasst werden. Zwar kann das Stufengetriebe 14 zur Unterstützung einer solchen Anpassung mit an sich bekannten Sperrsynchronisiereinrichtungen versehen sein, doch sind solche Sperrsynchronisiereinrichtungen für sich allein nicht leistungsfähig genug, um durch die in ihnen hergestellte reibschlüssige Verbindung zwischen den Wellen 13, 18 größere Drehzahlunterschiede auszugleichen. Bei den meisten derzeit im Handel verfügbaren hydrostatischen Getrieben sind die Schluckvolumina der Pumpen bzw. Motoren nur mit einem gewissen Spiel steuerbar, so dass, wenn das betreffende hydrostatische Getriebe nicht belastet ist, sein Übersetzungsverhältnis innerhalb eines durch dieses Spiel vorgegebene Intervalls beliebige Werte annehmen kann. Wenn hingegen die Pumpe eines solchen hydrostatischen Getriebes gegen eine Last arbeitet, dann neigt ihre Taumelscheibe dazu, innerhalb dieses Intervalls dazu die geringst mögliche Schrägstellung, entsprechend einem minimalen Schluckvolumen, anzunehmen, wohingegen die Taumelscheibe des Motors dazu neigt, innerhalb ihres Spiels die stärkstmögliche Schrägstellung einzunehmen. Die Erfindung macht sich dies zunutze, indem zur Vorbereitung eines Gangwechsels der Prozessor 12 die Schluckvolumina der Pumpen P1, P2 und Motoren M1, M2 so gegeneinander verstellt, dass diese sich gegenseitig belasten, so dass jede Pumpe und jeder Motor ein Schluckvolumen am Rande des durch das Spiel vorgegebenen Intervalls annimmt. Indem der Prozessor 12 im Vergleich zum stationären Betrieb das Schluckvolumen der Pumpe P1 herauf- oder das des Motors M1 herabsetzt, ohne eine gleichsinnige Änderung an der Pumpe P2 und/oder dem Motor M2 vorzunehmen, wird erreicht, dass der Druck auf dem Leitungsabschnitt 6 ansteigt und auf den Leitungsabschnitt 7 abnimmt. Wenn der Druck auf dem Leitungsabschnitt 7 höher ist als auf dem Abschnitt 9, dann ist der Motor M2 als Pumpe belastet, d.h. sein Schluckvolumen nimmt einen Wert am unteren Rand des durch das Spiel vorgegebenen Intervalls an, während die Pumpe P2 als Motor belastet ist, und ihr Schluckvolumen deshalb einen Wert am oberen Rand des Spielintervalls annimmt. Auf diese Weise sind die Schluckvolumina aller vier Motoren und Pumpen genau festgelegt. Dadurch ist das Übersetzungsverhältnis des hydrostatischen Getriebes 3 exakt steuerbar, und die Drehzahl der Ausgangswelle 13 kann durch Einstellen der Schluckvolumina so genau an die der Abtriebswelle 18 angepasst werden, dass ein Einlegen des neuen Gangs ohne Sperrsynchronisiereinrichtungen möglich ist, oder dass, falls das Stufengetriebe 14 über Sperrsynchronisiereinrichtungen verfügt, deren Überlastung zuverlässig vermieden werden kann.

Nach erfolgreichem Einlegen des neuen Gangs stellt der Prozessor 12 wieder im Rahmen der Einstellgenauigkeit gleiche Schluckvolumina an beiden Pumpen P1, P2 bzw. beiden Hydromotoren M1, M2 ein. Solange der neue Gang eingelegt bleibt, nimmt der Prozessor 12 allenfalls dann noch kleine Korrekturen an den Schluckvolumina vor, wenn dies nötig ist, um zu verhindern, dass die von den Sensoren 15a und 15b bzw. 15c und 15d erfassten Druckdifferenzen ein vorgegebenes Toleranzintervall um 0 verlassen.

Einer bevorzugten Ausgestaltung zufolge reagiert der Prozessor 12 auf einen Gangschaltwunsch einer übergeordneten automatischen Steuereinheit oder des Fahrers des Mähdreschers, indem er zunächst die Drehzahlen der Wellen 13, 2 berechnet, die bei Ausführung des Schaltwunsches aus der aktuellen Fahrgeschwindigkeit des Mähdreschers bzw. der aktuellen Drehzahl der Abtriebswelle 18 resultieren würden, und überprüft, ob diese innerhalb eines jeweils zulässigen Intervalls liegen. Ist dies nicht der Fall, muss der Schaltwunsch abgewiesen werden.

In einem Folgeschritt wird überprüft, ob die Drücke auf den Ringleitungen 4, 5, insbesondere in den Hochdruckabschnitten 6, 7, innerhalb eines zulässigen Intervalls liegen. Drücke, die oberhalb bzw. unterhalb dieses Intervalls liegen, können sich ergeben, wenn der Mähdrescher z.B. einen extremen Hang hinauf- oder hinunterfährt. Während des Gangwechsels ist der Kraftfluss vom Dieselmotor zu den Reifen hin unterbrochen, so dass das Fahrzeug in diesem Zeitraum unkontrolliert auf unzulässige Geschwindigkeiten beschleunigen oder abbremsen könnte. Daher wird auch in diesem Fall der Schaltwunsch ignoriert bzw. abgewiesen.

Wenn sich jedoch ein Schalten als möglich erweist, dann werden zur Vorbereitung des Schaltens zunächst beide Hydromotoren M1, M2 in Richtung kleiner Schluckvolumina verstellt, wobei gleichzeitig auch die Schluckvolumina der Pumpen P1, P2 angepasst werden, um den Druck auf den Leitungsabschnitten 6, 7 im Laufe der Verstellung im Wesentlichen konstant zu halten. Der Antrieb wird auf diese Weise "weicher" als bei der Fahrt unter stationären Bedingungen, d.h. Drehzahlschwankungen einer der Wellen 2, 13 des hydrostatischen Getriebes werden stärker innerhalb des Getriebes gepuffert und nicht so stark an die jeweils andere Welle übertragen als bei stationärer Fahrt. Natürlich kann das Schluckvolumen der Hydromotoren M1, M2 nicht auf Null reduziert werden; das zum Durchführen des Schaltvorgangs ideale Schluckvolumen kann von einem Modell eines hydrostatischen Getriebes 3 zum anderen variieren und sogar bei einem gegebenen hydrostatischen Getriebe je nach Ausgangs- oder Zielgang unterschiedlich sein. Ideale Werte sind hier im Einzellfall experimentell zu ermitteln.

Nachdem der zum Schalten ideale Wert des Schluckvolumens an den Hydromotoren M1, M2 erreicht ist, werden anschließend die Schluckvolumina der Pumpen P1, P2 verstellt, um den hydrostatischen Druck auf den Leitungsabschnitten 6, 7 abzusenken und dadurch den Antriebsstrang so weit zu entlasten, dass der aktuelle Gang im Stufengetriebe 14 ausgelegt werden kann. Nun schaltet der Prozessor 12 das Stufengetriebe 14 in die Neutralstellung.

Als nächstes wird das Schluckvolumen einer der beiden Pumpen, z.B. der Pumpe P2, so verstellt, dass die hydrostatischen Drücke auf den Leitungsabschnitten 6, 7 sich auseinanderentwickeln. Der Prozessor 12 überwacht die Entwicklung der Drücke über die Sensoren 15a-15d. Wenn der Druckunterschied zwischen den Leitungsabschnitten 6, 7 (oder 8, 9) einen von der Bauart der Pumpen P1, P2 und Hydromotoren M1, M2 abhängigen Grenzwert übersteigt, sind die Pumpen P1, P2 und Motoren M1, M2 so gegeneinander verspannt, dass ihre Schluckmengen spielfrei festliegen, und die Drehzahl der Ausgangswelle 13 kann präzise gesteuert werden, sei es durch Beeinflussen der Drehzahl des Dieselmotors 1 oder durch jeweils gleichzeitiges Verändern der Schluckvolumina beider Pumpen P1, P2 oder beider Motoren M1, M2. Wenn auf diese Weise die Drehzahl der Ausgangswelle 13 innerhalb eines vorgegebenen Toleranzbereichs an die Drehzahl der Abtriebswelle 18 und den neu einzulegenden Gang angepasst ist, wird der neue Gang eingelegt. Kleine Anpassungsfehler der Drehzahlen der Wellen 13, 18 führen zwar zu kurzfristigen Drucksprüngen auf den Leitungsabschnitten 6 bis 9, doch aufgrund der vor Beginn des Schaltvorgangs vorgenommenen Reduzierung der Schluckmengen wirken sie sich allenfalls gering auf die Drehzahl des Dieselmotors 1 bzw. die Fahrgeschwindigkeit des Mähdreschers aus.

Die Schluckvolumina der Pumpen P1, P2 werden nun wieder aneinander angeglichen, so dass die Druckdifferenz zwischen den Leitungen 6, 7 minimiert wird und jeweils wieder beide Pumpen P1, P2 bzw. beide Motoren M1, M2 gleichsinnig belastet sind. Anschließend werden die Schluckvolumina der Pumpen und Motoren auf einen als Funktion von Fahrzeuggeschwindigkeit und Wirkungsgrad vorgegebenen Wert angehoben.

Einer ebenfalls anhand von Fig. 1 veranschaulichten Weiterbildung der Erfindung zufolge ist in der Eingangswelle 2 und der Ausgangswelle 13 jeweils zwischen den zwei Pumpen P1, P2 bzw. den zwei Motoren M1, M2 eine Kupplung 20 bzw. 21, z.B. eine Klauenkupplung oder eine Lamellenkupplung, vorgesehen. Indem beide Kupplungen 20, 21 gleichzeitig geöffnet werden, kann das Teilgetriebe 11 aus dem Antriebsstrang ausgekoppelt werden. Wenn der Antriebsstrang gering belastet ist und das Teilgetriebe 10 zur Übertragung der benötigten Antriebsleistung ausreicht, insbesondere bei Straßenfahrt, ermöglicht die Stilllegung des Teilgetriebes 11 eine Reduzierung des Kraftstoffverbrauchs.

Abweichend von der Darstellung der Fig. 1 können die beiden Pumpen P1, P2 anstatt durch die gemeinsame Eingangswelle 2 auch über ein gemeinsames eingangsseitiges Getriebe aneinander und an den Dieselmotor 1 gekoppelt sein. Ein solches Getriebe kann notwendig sein, wenn aus Platzgründen nicht beide Pumpen an einer gemeinsamen Eingangswelle Platz finden; in diesem Falle kann das Getriebe beide Pumpen mit gleicher Drehzahl antreiben. Ein Getriebe, das beide Pumpen mit unterschiedlichen, aber zueinander proportionalen Drehzahlen antreibt, kann dann zweckmäßig sein, wenn die Pumpen und/oder Hydromotoren nicht baugleich sind, insbesondere wenn, wie oben beschrieben, eines der Teilgetriebe nicht ständig genutzt wird. In analoger Weise kann ein ausgangsseitiges Getriebe die beiden Hydromotoren M1. M2 miteinander und mit dem Stufengetriebe 14 verbinden.

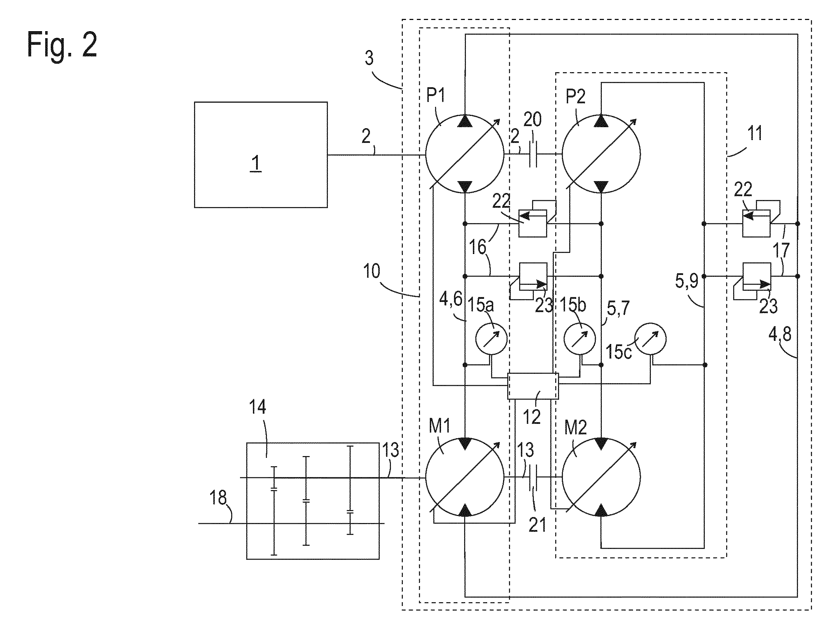

Einer in Fig. 2 gezeigten Abwandlung zufolge sind die Hochdruckabschnitte 6, 7 bzw. die Niederdruckabschnitte 8, 9 der zwei Ringleitungen 4, 5 untereinander durch Ausgleichsleitungen 16, 17 verbunden, die jeweils zwei antiparallel angeordnete Überdruckventile 22, 23 aufweisen. Indem jeweils eines der Überdruckventile 22, 23 an jeder Ausgleichsleitung 16, 17 öffnet, wenn eine vorgegebene Druckdifferenz zwischen den Leitungsabschnitten 6, 7 oder zwischen den Leitungsabschnitten 8, 9 überschritten ist, kann ein Divergieren der Druckdifferenz auch bei einer Fehlfunktion des Prozessors 12 ausgeschlossen werden. Die Druckdifferenz, bei der die Überdruckventile 22, 23 öffnen, ist erheblich größer als die vom Prozessor 12 im stationären Betrieb durch variierende Schluckmengen aufrechterhaltene; sie sollte insbesondere groß genug sein, um die für eine genaue Steuerbarkeit der Übersetzungsverhältnisse beider Teilgetriebe 10, 11 erforderliche Verspannung zwischen deren Pumpen P1, P2 und Motoren M1, M2 herbeizuführen.

Eine weitere Abwandlung sieht vor, dass die Druckdifferenz, bei der die Überdruckventile 22, 23 öffnen, zwischen einem zum Herbeiführen der Verspannung ausreichenden Wert und einem deutlich niedrigeren Wert, vorzugsweise Null, umschaltbar ist. Der Prozessor stellt den hohen Wert nur zur Vorbereitung und während eines Schaltvorgangs ein, ansonsten, im stationären Fahrbetrieb, sind die Überdruckventile 16, 17 offen. So kann sich im stationären Betrieb auch dann keine Druckdifferenz zwischen den Ringleitungen 4, 5 ausbilden, wenn das Verhältnis der Schluckmengen von Pumpe und Motor in den Teilgetrieben 10, 11 unterschiedlich ist, und die oben beschriebene fortlaufende Überwachung der Druckdifferenz und Korrektur der Schluckmengen, falls die Druckdifferenz das Toleranzintervall verlässt, kann entfallen.

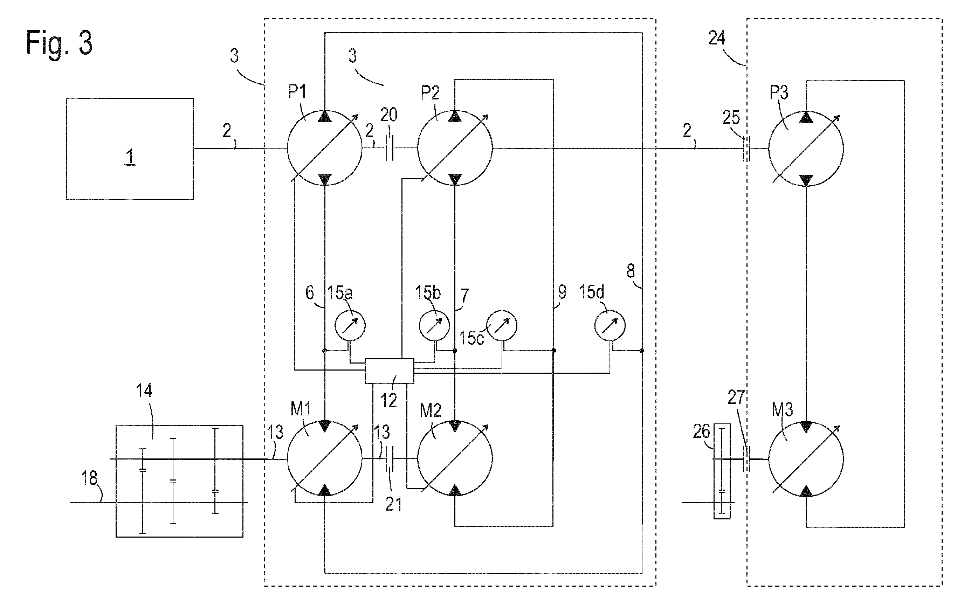

Noch eine Weiterentwicklung der Erfindung ist in Fig. 3 gezeigt. Das hydrostatische Getriebe 3 und das ihm nachgeschaltete Stufengetriebe 14 sind dieselben wie mit Bezug auf Fig. 1 oder 2 beschrieben und werden nicht erneut erläutert. Sie treiben eine erste Achse einer landwirtschaftlichen Arbeitsmaschine, im Falle eines Mähdreschers typischerweise die Vorderachse, an. Ein weiteres hydrostatisches Getriebe 24 mit einer Pumpe P3 und einem Hydromotor M3 ist parallel zum hydrostatischen Getriebe 3 an den Dieselmotor 1 angeschlossen, um eine zweite Achse, im Falle des Mähdreschers die lenkbare Hinterachse, anzutreiben. Die Pumpe P3 des hydrostatischen Getriebes 24 ist hier mit der Eingangswelle 2 der Pumpen P1, P2 direkt oder über ein Getriebe verbunden und ist durch eine Kupplung 25 selektiv vom Dieselmotor 1 und dem hydrostatischen Getriebe 3 abkuppelbar. Die Hinterachse ist hier jedoch nicht über ein eigenes Stufengetriebe analog dem Stufengetriebe 14 mit dem hydrostatischen Getriebe 24 verbunden, sondern nur durch eine weitere Kupplung 27 und ein einfaches Getriebe 26 mit nicht veränderbarem Übersetzungsverhältnis. Im geschlossenen Zustand der Kupplungen 25, 27 sind Vorder-und Hinterachse des Mähdreschers angetrieben.

Das Übersetzungsverhältnis des Getriebes 26 ist an den niedrigsten Gang des Stufengetriebes 14 so angepasst, dass wenn der niedrigste Gang im Stufengetriebe 26 eingelegt und die Kupplungen 25, 27 geschlossen sind, Räder an Vorder- und Hinterachse mit gleicher Umfangsgeschwindigkeit angetrieben sind. Dies spiegelt die Tatsache wider, dass ein Vierradantrieb des Mähdreschers im Allgemeinen nur beim Fahren im niedrigsten Gang benötigt wird; wenn das Stufengetriebe 14 in einen höheren Gang geschaltet wird, sollten gleichzeitig die Kupplungen 25, 27 geöffnet werden, um in diesem Fall ein verlustträchtiges Mitlaufen des hydrostatischen Getriebes 24 zu verhindern. Die Kupplung 25 kann hier auch entfallen, falls anstelle eines Öffnens der Kupplung 25 das Schluckvolumen der Pumpe P3 auf Null gesetzt wird.

Während eines Umschaltens zwischen dem niedrigsten und einem anderen Gang des Stufengetriebes 14 kann es bei dieser Ausgestaltung zweckmäßig sein, das hydrostatische Getriebe 24 unter Last zu halten. So kann eine vollständige Unterbrechung des Drehmomentflusses zwischen Dieselmotor 1 und den Rädern des Mähdreschers vermieden werden, während das Stufengetriebe 14 in der Neutralstellung ist. Drehzahländerungen aufgrund von Geländeneigung, die bei der Ausgestaltung der Fig. 1 die Drehzahlanpassung während des Schaltens erschweren, können auf diese Weise vermieden oder zumindest eingeschränkt werden, so dass ein Schalten des Stufengetriebes 14 auch in Fahrsituationen möglich wird, in denen es im Falle der Ausgestaltung der Fig. 1 oder 2 unterbleiben muss.

### Bezugszeichen

- 1: Dieselmotor
- 2: Eingangswelle
- 3: hydrostatisches Getriebe
- 4: Ringleitung
- 5: Ringleitung
- 6: Hochdruckabschnitt
- 7: Hochdruckabschnitt
- 8: Niederdruckabschnitt
- 9: Niederdruckabschnitt
- 10: Teilgetriebe
- 11: Teilgetriebe
- 12: Prozessor
- 13: Ausgangswelle
- 14: Stufengetriebe
- 15: Sensor
- 16: Ausgleichsleitung
- 17: Ausgleichsleitung
- 18: Abtriebswelle
- 20: Kupplung
- 21: Kupplung
- 22: Überdruckventil
- 23: Überdruckventil
- 24: hydrostatisches Getriebe
- 25: Kupplung
- 26: Getriebe
- 27: Kupplung

## Patentansprüche

1. Getriebeaggregat mit einem mechanischen Stufengetriebe (14) und einem an das Stufengetriebe gekoppelten hydrostatischen Getriebe (3), **dadurch gekennzeichnet, dass** das hydrostatische Getriebe zwei parallel zueinander mit dem Stufengetriebe verbundene hydrostatische Teilgetriebe (10, 11) umfasst und dass die beiden Teilgetriebe (10, 11) bei einem Schalten des Stufengetriebes (14) gegeneinander verspannt sind.

2. Getriebeaggregat nach Anspruch 1, **dadurch gekennzeichnet, dass** Pumpen (P1, P2) beider Teilgetriebe (10, 11) über eine gemeinsame Eingangswelle (2) oder ein eingangsseitiges Getriebe mit fester Übersetzung und Hydromotoren (M1, M2) beider Teilgetriebe (10, 11) über eine gemeinsame Ausgangswelle (13) oder ein ausgangsseitiges Getriebe mit fester Übersetzung miteinander gekoppelt sind.

3. Getriebeaggregat nach Anspruch 1 oder 2, **dadurch gekennzeichnet, dass** die erste Pumpe (P1) und der erste Hydromotor (M1) über eine erste Ringleitung (4) verbunden sind, und dass die zweite Pumpe (P2) und der zweite Hydromotor (M2) über eine von der ersten Ringleitung (4) verschiedene zweite Ringleitung (5) verbunden sind.

4. Getriebeaggregat nach Anspruch 3, **dadurch gekennzeichnet, dass** die erste und die zweite Ringleitung (4, 5) über eine Ausgleichsleitung (16) verbunden sind, die ein flussbegrenzendes Element (22, 23) enthält.

5. Getriebeaggregat nach Anspruch 4, **dadurch gekennzeichnet, dass** die flussbegrenzende Wirkung des Elements (22, 23) steuerbar ist.

6. Getriebeaggregat nach Anspruch 4 oder 5, **dadurch gekennzeichnet, dass** das flussbegrenzende Element ein Druckbegrenzungsventil (22, 23) ist.

7. Getriebeaggregat nach einem der vorhergehenden Ansprüche, **dadurch gekennzeichnet, dass** eine Steuereinheit (12) eingerichtet ist, das Übersetzungsverhältnis des ersten Teilgetriebes (10) unabhängig vom Übersetzungsverhältnis des zweiten Teilgetriebes (11) einzustellen.

8. Getriebeaggregat nach Anspruch 7, **dadurch gekennzeichnet, dass** die Steuereinheit (12) eingerichtet ist, das Übersetzungsverhältnis des ersten Teilgetriebes (10) abwechselnd größer und kleiner als das Übersetzungsverhältnis des zweiten Teilgetriebes (11) einzustellen.

9. Getriebeaggregat nach Anspruch 7 oder 8, **dadurch gekennzeichnet, dass** die Steuereinheit (12) eingerichtet ist, vor einem Schalten des Stufengetriebes (14) den Unterschied zwischen den Übersetzungsverhältnissen des ersten und des zweiten Teilgetriebes (10, 11) zu erhöhen.

10. Getriebeaggregat nach einem der Ansprüche 7 bis 9, **dadurch gekennzeichnet, dass** die Steuereinheit mit an den Ringleitungen (4, 5) angeordneten Drucksensoren (15a-15d) verbunden und eingerichtet ist, das Übersetzungsverhältnis anhand von von den Drucksensoren (15a-15d) gemessenen Drücken zu regeln.

11. Getriebeaggregat nach einem der vorhergehenden Ansprüche, **dadurch gekennzeichnet, dass** eine Steuereinheit (12) eingerichtet ist, vor einem Schalten des Stufengetriebes (14) das Schluckvolumen von Hydromotor (M1, M2) und Pumpe (P1, P2) wenigstens eines der Teilgetriebe (10, 11) zu reduzieren.

12. Landwirtschaftliche Arbeitsmaschine, **gekennzeichnet durch** einen Fahrantrieb, der ein Getriebeaggregat nach einem der vorhergehenden Ansprüche umfasst.

13. Landwirtschaftliche Arbeitsmaschine nach Anspruch 12, **dadurch gekennzeichnet, dass** das hydrostatische Getriebe (3) ein erstes hydrostatisches Getriebe zum Antreiben einer ersten Achse der Maschine ist und ein zweites hydrostatisches Getriebe (24) zum Antreiben einer zweiten Achse der Arbeitsmaschine an eine Eingangswelle (2) des ersten hydrostatischen Getriebes (3) koppelbar ist.

## Claims

1. A transmission assembly having a mechanical stepped transmission (14) and a hydrostatic transmission (3) coupled to the stepped transmission, **characterised in that** the hydrostatic transmission includes two hydrostatic transmission portions (10, 11) connected to the stepped transmission in mutually parallel relationship and that the two transmission portions (10, 11) are braced relative to each other in the event of a shift of the stepped transmission.

2. A transmission assembly according to claim 1 **characterised in that** pumps (P1, P2) of both transmission portions (10, 11) are coupled together by way of a common input shaft (2) or an input-side transmission with a fixed transmission ratio and hydraulic motors (M1, M2) of both transmission portions (10, 11) are coupled together by way of a common output shaft (13) or an output-side transmission with a fixed transmission ratio.

3. A transmission assembly according to claim 1 or claim 2 **characterised in that** the first pump (P1) and the first hydraulic motor (M1) are connected by way of a first ring conduit (4) and that the second pump (P2) and the second hydraulic motor (M2) are connected by way of a second ring conduit (5) different from the first ring conduit (4).

4. A transmission assembly according to claim 3 **characterised in that** the first and second ring conduits (4, 5) are connected by way of a compensating conduit (16) which includes a flow-limiting element (22, 23).

5. A transmission assembly according to claim 4 **characterised in that** the flow-limiting action of the element (22, 23) is controllable.

6. A transmission assembly according to claim 4 or claim 5 **characterised in that** the flow-limiting element is a pressure limiting valve (22, 23).

7. A transmission assembly according to one of the preceding claims **characterised in that** a control unit (12) is adapted to adjust the transmission ratio of the first transmission portion (10) independently of the transmission ratio of the second transmission portion (11).

8. A transmission assembly according to claim 7 **characterised in that** the control unit (12) is adapted to adjust the transmission ratio of the first transmission portion (10) alternately larger and smaller than the transmission ratio of the second transmission portion (11).

9. A transmission assembly according to claim 7 or claim 8 **characterised in that** the control unit (12) is adapted to increase the difference between the transmission ratios of the first and second transmission portions (10, 11) before a shift in the stepped transmission (14).

10. A transmission assembly according to one of claims 7 to 9 **characterised in that** the control unit is connected to pressure sensors (15a-15d) arranged at the ring conduits (4, 5) and is adapted to regulate the transmission ratio on the basis of pressures measured by the pressure sensors (15a-15d).

11. A transmission assembly according to one of the preceding claims **characterised in that** a control unit (12) is adapted to reduce the displacement volume of the hydraulic motor (M1, M2) and the pump (P1, P2) of at least one of the transmission portions (10, 11) prior to a shift in the stepped transmission (14).

12. An agricultural working machine **characterised in that** by a travel drive which includes a transmission assembly according to one of the preceding claims.

13. An agricultural working machine according to claim 12 **characterised in that** the hydrostatic transmission (3) is a first hydrostatic transmission for driving a first axle of the machine and a second hydrostatic transmission (24) can be coupled to an input shaft (2) of the first hydrostatic transmission (3) for driving a second axle of the working machine.

## Revendications

1. Ensemble boîte de vitesses comprenant une boîte de vitesses étagée mécanique (14) et une boîte de vitesses hydrostatique (3) couplée à la boîte de vitesses étagée, **caractérisé en ce que** la boîte de vitesses hydrostatique comprend deux boîtes de vitesses partielles (10, 11) reliées en parallèle entre elles à la boîte de vitesses étagée, et **en ce que** les deux boîtes de vitesses partielles (10, 11) sont serrées l'une contre l'autre lors d'un changement de vitesse de la boîte de vitesses étagée (14).

2. Ensemble boîte de vitesses selon la revendication 1, **caractérisé en ce que** des pompes (P1, P2) des deux boîtes de vitesses partielles (10, 11) sont couplées entre elles par l'intermédiaire d'un arbre d'entrée commun (2) ou d'une boîte de vitesses à rapport fixe côté entrée, et des moteurs hydrauliques (M1, M2) des deux boîtes de vitesses partielles (10, 11) sont couplés entre eux par l'intermédiaire d'un arbre de sortie commun (13) ou d'une boîte de vitesses à rapport fixe côté sortie.

3. Ensemble boîte de vitesses selon la revendication 1 ou 2, **caractérisé en ce que** la première pompe (P1) et le premier moteur hydraulique (M1) sont reliés par une première conduite circulaire (4), et **en ce que** la deuxième pompe (P2) et le deuxième moteur hydraulique (M2) sont reliés par une deuxième conduite circulaire (5) différente de la première conduite circulaire (4).

4. Ensemble boîte de vitesses selon la revendication 3, **caractérisé en ce que** la première et la deuxième conduite circulaire (4, 5) sont reliées par une conduite de compensation (16) qui contient un élément limiteur de flux (22, 23).

5. Ensemble boîte de vitesses selon la revendication 4, **caractérisé en ce que** l'effet limiteur de flux de l'élément (22, 23) peut être commandé.

6. Ensemble boîte de vitesses selon la revendication 4 ou 5, **caractérisé en ce que** l'élément limiteur de flux est une soupape de limitation de pression (22, 23).

7. Ensemble boîte de vitesses selon l'une des revendications précédentes, **caractérisé en ce qu'**une unité de commande (12) est conçue pour régler le rapport de transmission de la première boîte de vitesses partielle (10) indépendamment du rapport de transmission de la deuxième boîte de vitesses partielle (11).

8. Ensemble boîte de vitesses selon la revendication 7, **caractérisé en ce que** l'unité de commande (12) est conçue pour régler le rapport de transmission de la première boîte de vitesses partielle (10) à une valeur alternativement supérieure et inférieure au rapport de transmission de la deuxième boîte de vitesses partielle (11).

9. Ensemble boîte de vitesses selon la revendication 7 ou 8, **caractérisé en ce que** l'unité de commande (12) est conçue pour, avant un changement de vitesse de la boîte de vitesses étagée (14), augmenter la différence entre les rapports de transmission de la première et de la deuxième boîte de vitesses partielle (10, 11).

10. Ensemble boîte de vitesses selon l'une des revendications 7 à 9, **caractérisé en ce que** l'unité de commande est reliée à des capteurs de pression (15a-15d) disposés sur les conduites circulaires (4, 5) et est conçue pour régler le rapport de transmission à l'aide des pressions mesurées par les capteurs de pression (15a-15d).

11. Ensemble boîte de vitesses selon l'une des revendications précédentes, **caractérisé en ce qu'**une unité de commande (12) est conçue pour, avant un changement de vitesse de la boîte de vitesses étagée (14), réduire le volume d'absorption du moteur hydraulique (M1, M2) et de la pompe (P1, P2) d'au moins une des boîtes de vitesses partielles (10, 11).

12. Machine de travail agricole, **caractérisée par** un groupe propulseur qui comprend un ensemble boîte de vitesses selon l'une des revendications précédentes.

13. Machine de travail agricole selon la revendication 12, **caractérisée en ce que** la boîte de vitesses hydrostatique (3) est une première boîte de vitesses hydrostatique pour entraîner un premier essieu de la machine, et une deuxième boîte de vitesses hydrostatique (24) peut être couplée à un arbre d'entrée (2) de la première boîte de vitesses hydrostatique (3) pour entraîner un deuxième essieu de la machine de travail.
